# EUROPEAN PATENT APPLICATION

(11) **EP 4 687 344 A1**
(43) Date of publication of application: **04.02.2026**
(21) Application number: 25192832.1
(22) Date of filing: 30.07.2025
(51) Int. Cl.: H04N 21/231, H04N 21/81, H04N 21/2225, A63F 13/355

(54) **CONTENT STREAMING SYSTEM AND METHOD**

(30) Priority: 02.08.2024 GB 202411427
(71) Applicant: Sony Interactive Entertainment Inc., Tokyo 108-0075 (JP)
(72) Inventor: BARMAN, Nabajeet, London, W1F 7LP (GB); ZADTOOTAGHAJ, Saman, London, W1F 7LP (GB); BIGOS, Andrew, London, W1F 7LP (GB); MOTILLA, Daniel, London, W1F 7LP (GB); SANDERS, Matthew, London, W1F 7LP (GB); CURRIUS, Roc Ramon, London, W1F 7LP (GB)
(74) Representative: D Young & Co LLP

(57) **Abstract**

An interactive content provision system comprises a primary server configured to generate interactive content, and to stream generated interactive content to an edge server, and an edge server configured to receive generated interactive content from the primary server, and stream it to a client device; wherein the edge server is further configured to store at least some cached content, being predetermined content of the interactive content generated by the primary server, the edge server is configured to receive data from the primary server indicating a cached content for provision to the client device by the edge server, and the edge server is configured to provide streamed generated interactive content and indicated cached content to the client device.

## Description

### BACKGROUND OF THE INVENTION

### Field of the invention

The present invention relates to a content streaming system and method.

### Description of the Prior Art

Content providers such as video streaming services, and similarly some websites, typically have primary or source servers that provide their content, and these may for example be geographically located close to the service provider.

However, for providers with a global reach, this model could result in unwanted latencies for users who are a significant distance from the primary servers. As a result, so-called edge-servers may be deployed on a regional basis to cache content from the primary servers to deliver to users in their region, thereby reducing latency for those users.

However, whilst this approach works well for non-interactive content, where the edge servers act as passive stores for copies of content originating on primary servers and can be updated on a scheduled basis in a similar manner to a virtual warehouse, it is not appropriate for interactive content such as videogames, where the content is being generated by a primary server in real time in response to inputs from users; in this case an edge server would simply appear to be another node forwarding the live content between primary server and the client - but game applications in particular are very sensitive to latency and so this problem can be acute when there is a geographical separation between primary servers and users, and so an equivalent to such edge servers for interactive content would be desirable.

The present invention seeks to alleviate or mitigate this problem.

### SUMMARY OF THE INVENTION

Various aspects and features of the present invention are defined in the appended claims and within the text of the accompanying description.

In a first aspect, an interactive content provision system is provided in accordance with claim 1.

In another aspect, a client device is provided in accordance with claim 11.

In another aspect, a method of interactive content provision is provided in accordance with claim 12.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of a server - client system known in the art.
- Figure 2 is a schematic diagram of an interactive content provision system in accordance with embodiments of the present description.
- Figure 3 is a schematic diagram of an interactive content provision system in accordance with embodiments of the present description.
- Figure 4 is a schematic diagram of a client device system in accordance with embodiments of the present description.
- Figure 5 is a flow diagram of a method of interactive content provision in accordance with embodiments of the present description.

### DESCRIPTION OF THE EMBODIMENTS

A content streaming system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

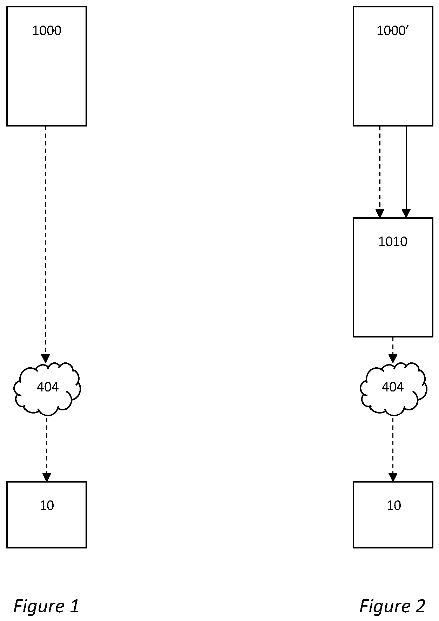

Referring now to the drawings, wherein like reference numerals designate identical or corresponding parts throughout the several views, Figure 1 shows a conventional server-client arrangement comprising a server 1000 communicating with a client device 10 via a long distance network 404, such as the internet.

The time taken for data to travel from the server to the client may be relatively long, in part as a pure function of distance, but more significantly because hops (connections within the internet linking the primary server to the client) tend to add time and slow down the effective speed of the data.

Hence for streaming a videogame, where the current game image will be displayed when it has been received, the latency for that image is both a function of distance travelled (which may be thought of as contributing to the leading-edge latency) but also data size, as a large amount of data travelling slowly takes longer to completely arrive (which may be thought of as contributing to the trailing-edge latency).

In conventional edge-server systems, in effect this problem is bypassed by providing copies of the source data closer to the user so there is less distance and fewer hops, making the data more responsive and fast.

However, for interactive content, this approach is not possible as the source content is created live in response to user interactions. Whilst it would be possible to provide more primary servers closer to the user, this is then not an edge-server system.

### Edge Server

Accordingly, in embodiments of the present description, edge-server systems are provided that improve latency for at least some parts of a streamed interactive content such as a videogame.

Referring to Figure 2, in an embodiment of the present description an interactive content provision system (or 'edge server system' elsewhere herein, e.g. one including an edge server as well as a primary/source server for providing interactive content to a client) comprises a modified primary server 1000', an edge server 1010, and optionally the client device 10 (e.g. when a client joins to access content provided by the edge server system).

In this configuration, the primary server still streams interactive videogame content to the edge server, signified by the dashed line. Clearly there is scope to optimise the path between these two servers as they will be persistent points of communication, and this in itself can assist with latency and speed (and hence both leading edge and training edge latency).

It will be appreciated that there may be multiple edge servers deployed at disparate locations geographically and/or according to network topology, and one appropriate to the end client for this interactive content is selected for this purpose.

The edge server can then be utilised to reduce the amount of data streamed from the primary server in one or more successively more interactive modes.

### First Mode

In a first mode, a game may have a non-interactive element (although typically they can be skipped by the user) such as a so-called cut scene. Conventionally the primary server streams these the same as any other part of the game content.

However, in instances of the present description, the primary server may instead output data identifying such cut-scenes, where these occur, rather than the cut-scenes themselves (such request, command, or metadata is signified by the solid line); the edge server may then provide these from a local cache.

In this case, the cut-scenes may be pre-recorded videos associated with the game or may be scripted animation within the game. In the latter case, the resulting scripted animation may be recorded and played in a similar manner to pre-recorded video at the edge server. A primary server may then send an instruction to the edge server that it should stream the relevant recorded content from its cache instead of streaming the resulting video itself.

Optionally, the edge server can respond to the instruction to confirm whether or not it has the relevant recorded content. If it does not, then the server could generate and output it as it would conventionally, with instructions for the edge server to also record the stream. Then when the cut scene is encountered again by another instance of the game on the primary server, that instance would not need to generate its own stream.

In this way an edge server could build up a repository of such cut scenes. This may be of use particularly for a game where different versions of a main character are available and so multiple versions of a scripted cut-scene may be possible.

The above first mode relates to content that is non-interactive that is interspersed between periods of interactive content.

Meanwhile a second mode relates to content that is non-interactive that is provided in parallel with interactive content.

### Second Mode

An example of this is audio; a whilst a user may be changing position and viewpoint interactively within a game and so changing the streamed images, which are hence interactive, typically some music, some ambient sounds, and some dialogue may persist independent of that interaction, or be modified only in a relatively simple manner (e.g. changing relative volume levels on respective channels). As such this may be considered as non-interactive content running in parallel with the interactive content.

In practice such content is typically interactive in the sense that it is triggered by changes to the game state, but typically once triggered/started it is then played back in a non-interactive fashion rather than being generated on a frame-by-frame or real time basis like the in-game images.

Hence in this second mode, the edge server can cache content that is non-interactive that is provided in parallel with interactive content. Put another way, it can cache pre-recorded elements of the content (i.e. inherently non-interactive content components) that are then used interactively (i.e. triggered/selected and played back responsive to evolving gameplay and user actions), but are non-interactive during use (i.e. simply play back). Notably even such non-interactive content can typically be interrupted and skipped, and as noted above may have the playback modified by changing channel volumes or applying effects such as echo.

Hence in this mode the primary server may stream interactively generated images, but in a similar manner to the cut-scenes, not stream the (or all of the) audio that accompanies them. Instead, the server can output data identifying the audio data to be produced and the timing for it to the edge server, in a generally similar manner to how it would internally output a request for the audio asset for playback at a specific moment from an audio file repository stored locally at the primary server.

The edge server can then receive a request from the primary server along with the stream, add the identified audio, and relay this to the client. The edge server may also implement channel level adjustment (e.g. changing audio levels for stereo, 5.1 or 7.1 sound, for example in response to primary server instructions, to represent changes of position or distance relative to the virtual sound source).

The edge server may also implement environmental processing on the audio such as echoes, or cache audio with such processing already applied, selecting the appropriate version based on instructions included in or in association with the server stream.

By avoiding the need to include at least some dialogue, music, ambient sounds, and/or common sounds like footsteps or gunshots from the primary server's data stream the overall stream from the primary server can be smaller on a frame-by-frame basis.

As well as freeing up bandwidth and potential congestion at the primary server, this can also reduce the trailing edge latency of the stream as the overall time to completion of data associated with a current frame of content will typically be shorter for the majority of the network between the primary server and the edge server. As a result, the completed image will appear on the client's screen earlier.

If the first mode relates to wholly non-interactive content, and the second mode relates to non-interactive content instigated in parallel with interactive content, then a third mode relates to interactive content that is currently not being interacted with.

### Third Mode

This typically occurs when the viewpoint of the game is controlled by the game itself rather than the user, and so typically a large proportion of the scene is either static or predictable/scripted. Hence for example in platform games and so-called metroidvania games, most of the on-screen environment is static for the duration of time that the user is playing, and typically flips between static environments every few seconds or minutes. Similarly, dialogue scenes with non-player characters ('NPC's) often adopt a fixed camera viewpoint and so the majority of the image can be predetermined. Similar observations apply to items such as in-game menus, skill trees, maps, and the like, which might change as game play evolves (e.g. more of a map becomes visible) but at any given time tend to be static when displayed.

Hence in the third mode, the edge server is provided with cached image data for known views of the game - e.g. respective levels of a platform game, or footage including the background for NPC dialogues, or even footage of NPC dialogues for some (e.g. N most common) or all dialogue trees of some (e.g. P most common) or all NPCs.

The primary server can then provide information to the edge server indicating whether image information from the cache is required, or background image information, and stream only those parts of the image that diverge from the cached version. For example in a platform game, these may include the main character, current enemies, and any part of the scene that includes a moving element of the environment, or an element affected by lighting effects, for example. Meanwhile the rest of the image need not be included in the stream.

Which parts of the image are included in the stream and which are not may be indicated for example by using image tiles or other addressable image blocks. The interactive content may be streamed to the edge server on a tile-by tile or block-by block basis, and the missing blocks are then added to the stream by the edge server. Alternatively the interactive content may be streamed as a whole image with for example black/blank regions where the cached content will be used, and the streamed image is then updated as appropriate by the edge server. This may be done either whilst the stream is still encoded (for example substituting larger encoded cached data for the smaller encoded blank data) or after decoding the image, merging it with the cached image, and re-encoding and sending it.

In this way, the amount of data streamed from the primary server can be significantly reduced, again freeing up bandwidth and potential congestion at the primary server, and again also reducing the trailing edge latency of the stream as the overall time to completion of data associated with a current frame of content will typically be shorter for the majority of the network between the primary server and the edge server. As a result, the completed image will appear on the client's screen earlier.

As noted above, this approach can be used when a large proportion of the scene is predictable/scripted. In this case, it may therefore be used for cut-scenes using scripted animation within the game that feature a main character whose appearance has been configured by the user, either by a face/body editor in the game, and/or by the selection of clothes, armaments and the like that they have equipped. Such scenes may optionally be marked as such by a developer to assist the techniques herein.

In this case, the part of the cut-scene comprising the customised character can be transmitted from the primary server, and the rest can be added at the edge server.

A similar implementation may be where pre-recorded video is incorporated into the game; this may happen when a user is navigating a skill tree, and an animated video shown what a new skill will do. At other times, it is an element of the environment such as a television programme. Again the primary server can indicate where within the streamed image the video is to go (optionally with appropriate scaling and/or warping), and the edge server can incorporate it.

As an extension of the third mode, alternatively or in addition to the techniques of the third mode optionally the edge server could cache the last complete image sent to the client. Then, if the next generated image did not include a change in field of view (for example because the user did not move their character or view point between successive frames) then this could be signalled to the edge server, and only those parts of the next generated image that are different from the previous image need be transmitted. This may again take the form of transmitting only a subset of tiles or blocks encompassing areas of change, or an image with unchanged areas masked for replacement with image data at the edge server. Optionally alternatively it may take the form of delta data encoding the change between the successive images; the edge server would then need to compute the resulting new image.

A further extension of this mode could use motion vectors for motion between the cached and next video image to offset the image data in the cache and still use it, even if the user does move their viewpoint slightly between frames. In this case the relative position of the static elements of the two images can be easily indicated by pan and or zoom metadata, whilst any new image data brought into view can be transmitted from the primary server. Dynamic elements of the image (such as moving characters) can be transmitted from the primary server as before, but may also be optionally encoded using a motion-aware encoding scheme such as H.264.

In each case, this would again reduce the size of the overall stream from the primary server since it would only need to transmit frame-to-frame differences in the images.

As well as freeing up bandwidth and potential congestion at the primary server, again this can also reduce the trailing edge latency of the stream as the overall time to completion of data associated with a current frame of content will typically be shorter for the majority of the network between the primary server and the edge server. As a result the completed image will appear on the client's screen earlier.

### Fourth Mode

Finally, in a fourth mode, the edge server can interact with the primary server to offload some of the rendering requirements of the primary server. For example, most games have a foreground region that is typically constructed from polygons to which textures are applied, and which are typically interactive in the sense of being known geometry within the environment - but beyond a certain draw distance, this can be replaced with elements that simply provide background. A common example would be a so-called skybox, which provides a spherical or hemispherical background image of the distant environment (e.g. the sky, and perhaps distant mountains). This fills the screen wherever there is no foreground content.

In the fourth mode, the sky box is either not rendered by the primary server, or is rendered at a low resolution, or is rendered as normal but in each case is not included in the transmitted stream (for example being masked off using the z-axis information within the game environment that indicates the furthest extend of the foreground objects). This again reduces the size of the overall stream from the primary server, with the attendant benefits described elsewhere herein.

The primary server also transmits information to the edge server indicating the viewpoint of the image (e.g. the direction of view and field of view, and typically also the location in the game world) and the edge server then selects the appropriate element(s) (e.g. a skybox), and the appropriate orientation of the skybox relative to the viewpoint, and adds the skybox image data into the streamed image to complete it.

This approach need not be limited to the skybox, although this is likely to account for a relatively large proportion of the transmitted image in some games; it may also be applied to elements of a heads-up display or other constant overlays on the image that need not then be included in the primary server image, or at a lower resolution (for example if this helps with the transparent operation of the game).

Hence it may also be applied for example to part of the in-game geometry that, in some games, fulfils a similar or complementary function to the skybox, such as the stadium in a football game, and/or the spectators in it - for example when these are at a sufficient distance from the camera viewpoint/foreground action that it is not obvious if they are re-used or generic crowd animations or the like. A small number of variations could be made available (e.g. depending on respective teams, weather, day or evening match and the like), and the most appropriate can be requested by the primary server.

It will be appreciated that the primary server and the edge server may operate in any of the above modes, both sequentially and/or in parallel (i.e. using different modes for different parts of the content, either for different image frames or within different parts of the same image frame, as appropriate).

Hence in general terms, for each of these four modes, the edge server caches game assets (videos, images, skyboxes, overlays, etc.), and receives dynamically generated content from the primary server (i.e. content that is not predetermined and common to most or all instances of the game), such as for example the actions of the current player and enemies, or viewpoints not already cached in the edge server, either at set-up or just for the preceding frame. The edge server then combines the received content with cached content as appropriate, typically in response to metadata indicating relevant aspects of the current game state, before passing the combined result on to the end client.

Advantageously therefore the majority of the network path, from the primary server to the edge server, is only traversed by the smaller dynamic component of the content, reducing bandwidth utilisation, and congestion, and the duration between the leading and trailing edges of the data and thus the overall time to completion of the reception of the data.

Providing the time taken by the edge server to fill in the rest of the content is shorter than the time saved by only sending part of the content from the primary server, the result is a net reduction in latency when the complete content is delivered to the end client.

The above caveat may be tested for as part of the process; hence if the client has a high quality connection (e.g. fast, with high bandwidth) between the client and the primary server, then optionally the system may revert to a traditional streaming model, just streaming the original full output from the primary server (even if the edge server is still a hop / relay on the path between them).

### Caching Options

A primary server may deliver content to multiple edge servers. Whilst in principle all edge servers could be provided with all content needed to implement some or all of the techniques/modes herein, for a large portfolio of games this may be a significant amount of data.

Notably for a fast implementation at the edge server, that data should preferably be available for fast recall, e.g. within RAM, or an equivalent high speed buffer, rather than, say, stored on an HDD or raid array.

This in turn imposes a practical limit on the number of assets that can be stored for use by the edge server.

Accordingly, in embodiments of the present description, the content streaming system assesses which assets to make available, e.g. in accessible / 'working' memory (i.e. memory capable of delivering the assets quickly enough to contribute to latency reduction).

This assessment may make use of one or more of the following metrics:
- Which games are most commonly accessed via that edge server
   - This could be used to provide initial asset sets
- Where the server is located
   - This could be used to select regionalised versions of assets, e.g. the language of the dialogue
- Which particular assets are used by the edge server most frequently
   - For example footstep audio may be frequent, whilst a specific line of dialogue might not
- The equivalent server bandwidth cost of the asset x frequency
   - A small but frequently used asset may reduce overall bandwidth more than a large but rarely used asset.
- The distribution of saved bandwidth
   - A cut-scene could save a lot of bandwidth for 30 seconds, but perhaps only once an hour; as such it may not help with general congestion or trailing edge latency as much as an asset that saves less band width, but does so almost continuously. The relative value of these assets may depend on further factors such as network conditions at the primary and/or edge servers, quality of service thresholds, current user activity, and the like.

Alternatively or in addition, other metrics not directly related to the assets may influence the operation of the system, such as current primary server load, current edge server load, current actual latency and the latency sensitivity of the client's game (either in general or at that point), user bandwidth, and network congestion. Hence for example a cut-scene could save a lot of bandwidth for 30 seconds but if the user does not need to react to it, then it may be latency insensitive and so does not need to be supplied by the edge server - unless, perhaps, there is network congestion at the primary server because it is running near capacity, in which case the bandwidth reduction from not outputting it at the primary server would be beneficial overall.

The edge server can keep track of which assets are used and how frequently, to determine an effective bandwidth per period value for respective assets, and retain those with the highest value in working memory.

In order to enable this cache to evolve, the cache may comprise a short term and a longer term component, with new cache items received from the primary server being evaluated against longer term items.

Alternatively or in addition, where some items are stored in working memory and some are in slower storage (either at the edge server or at the primary server or a third server, not shown), a track of the number of requests to use an asset made by the primary server may be used to determine promotion of an asset from storage to memory, or conversely relegation from memory to storage.

Again an asset may be selected for inclusion in memory on the basis several metrics, including simply frequency or number of requests in a period; or bandwidth cost of asset x frequency or number of requests in a period.

Hence for example on one edge server, a particular game is very popular, and so the edge server has received a set of assets for use with the techniques herein. It may also be provided with an initial subset of assets to use in working memory (e.g. corresponding to welcome and menu screens, tutorial levels and the like), for example as identified by the game developers, or empirically for example during quality and assurance or quality assessment ('Q&A') testing.

As players on client devices stream the game, the primary server is requesting use of assets at the edge server according to any of the techniques herein, and the edge server can keep track of which assets are requested for use; where a first asset is being requested that the edge server has to refuse the use of (e.g. because it is in slow storage), and the bandwidth cost of the first asset x frequency or number of requests in a period for that first asset exceeds the equivalent calculation for a second asset currently in working memory, then it is more efficient for the second asset to be relegated to slow storage, and the first asset be promoted to working memory (assuming there is no spare memory to accommodate both).

By comparing the actual utilisation of assets in working memory, and the would-be utilisation of assets not in working memory (e.g. in slow storage or not yet acquired from the primary server), the edge server can continually maintain a good, and preferably the best, constellation of assets in memory to reduce overall bandwidth and congestion at the primary server, and reduce trailing edge latency for the user, using the techniques herein.

### Variants

The above embodiments assume that some content may be added to the stream at the edge server.

However, in principle some content could be added at the client, alternatively or in addition to at the edge server.

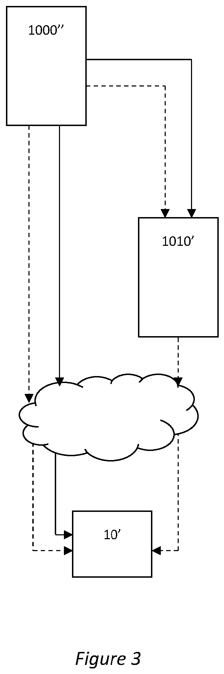

Referring now also to Figure 3, in this case, for example, the primary server 1000" or the edge server 1010' may track which assets are the most effective to use, and download these to the client 10'. The client can then add them to the stream image themselves. Advantageously this can also reduce bandwidth, congestion, and trailing edge latency in the network between the edge server and the client (which may, kilometre-for-kilometre, be the slowest part of the journey).

It may also free up the working memory of the edge server to provide other assets to an incoming stream, either in the same game or in other games, so that even greater bandwidth and latency reductions are possibly between the primary server and edge server.

Hence in some embodiments of the present description the techniques herein may be implemented by using assets at the edge server, at the client, or at both. What implementation is chosen may depend on developer choice, the relative network conditions between the edge server and a client, and the computational power and memory capacity of the respective client. Different clients in contact with the same edge server may operate differently in this regard.

Hence in Figure 3, an edge server 1010' may estimate that a subset of assets are most common for a game currently being played on client device 10' and send a copy of these assets to the client device.

The edge server then relays to the client device requests from the primary server to the edge server to incorporate any of these assets into the stream, rather than do so itself. Meanwhile optionally it may incorporate other assets that it now has free memory to use.

The client device then incorporates the requested asset(s) into the stream or decoded partial image, as appropriate, in a similar manner to that described for the edge server previously.

Alternatively or in addition, when the client has received the selected assets, the edge server may then inform the primary server that these assets are now at the client device. The primary server may then transfer the use of the techniques described herein from the edge server to the client device entirely for that device, at least for those assets. In this case, the primary server may route streamed data directly to the client, as we as requests/commands to use the assets held by the client as per any of the techniques herein.

It will be appreciated that a hybrid approach may also be used, where some data is streamed to the client (optionally using the edge server as a passive hop, so that the overall path time remains similar) together with commands for the client, and some data is streamed via the edge server with commands to the edge server (e.g. where the primary server knows that the client device does not have an asset that the edge server can provide).

Hence in embodiments of the present description, the primary server (1000', 1000") may output streams of partial images and/or audio together with requests for these to be added by one or both of the edge server and the client device. Where only a subset of possible assets is currently available at the edge server or the client device, this is received by the server which may then only omit parts of the images/audio within that subset, but also indicate which other parts could be replaced from the wider set of assets so as to facilitate updates to the subset as usage trends change, all as according to any of the techniques described elsewhere herein.

Meanwhile in embodiments of the present description, the edge server (1010, 1010') may receive from the primary server streams of partial images and/or audio together with requests for these to be added by the edge server. Where the edge server has limited memory and can only do so for a subset of possible assets, it may inform the primary server which parts of the images and/or audio it can currently reconstruct. It may also maintain records of what other parts of the images and/or audio could be replaced from the wider set of assets so as to swap assets with higher potential utility with those of lower utility in the memory, all as according to any of the techniques described elsewhere herein. The edge server then forwards the reconstructed images and/or audio to the end client, optionally with requests for further reconstruction if the client is using similar techniques.

Similarly in embodiments of the present description, the client device may receive complete streamed images and/or audio from the primary server, or may receive complete or reconstructed streamed images and/or audio from the edge server, or may receive partial images and/or audio from either server together with requests incorporate assets into the partial images and/or audio that the client device has previously received, as according to any of the techniques described elsewhere herein.

### Hardware

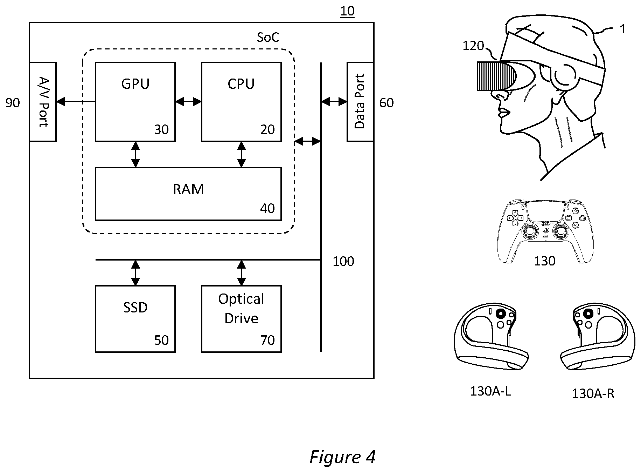

Referring now also to Figure 4, this Figure illustrates an example of a client device (10, 10'), but may also serve (either in physical or virtual form) as an example of at least part of the primary server that generates interactive content, and/or as an example of at least part of the edge server that caches content. The client device (10, 10') may for example be a computer or console.

The client device comprises a central processor or CPU 20. The client device also comprises a graphical processing unit or GPU 30, and RAM 40. Two or more of the CPU, GPU, and RAM may be integrated as a system on a chip (SoC). Further storage may be provided by a disk 50, either as an external or internal hard drive, or as an external solid state drive, or an internal solid state drive.

The client device may transmit or receive data via one or more data ports 60, such as a USB port, Ethernet^{®} port, Wi-Fi^{®} port, Bluetooth^{®} port or similar, as appropriate. It may also optionally receive data via an optical drive 70. Audio/visual outputs from the client device are typically provided through one or more A/V ports 90 or one or more of the data ports 60. Where components are not integrated, they may be connected as appropriate either by a dedicated data link or via a bus 100.

An example of a device for displaying images output by the entertainment system is a head mounted display 'HMD' 120, worn by a user 1. Another example would be a TV or integral display (not shown)

Interaction with the client device is typically provided using one or more handheld controllers 130, and/or one or more VR controllers (130A-L,R) in the case of the HMD.

### Summaries

In a summary embodiment of the present description, an interactive content provision system (or 'edge server system') comprises the following.

A primary server (1000', 1000") configured to generate interactive content and to stream generated interactive content to an edge server, as described elsewhere herein.

An edge server (1010, 1010') configured to receive generated interactive content from the primary server, and stream it to a client device (10, 10'), as described elsewhere herein.

The edge server is further configured to store at least some cached content, being predetermined content of the interactive content generated by the primary server, as described elsewhere herein.

The edge server is configured to receive data from the primary server indicating cached content for provision to the client device by the edge server (this data may be explicit for example in the form of metadata or instructions, or may be implicit for example in the form of blank parts of images, or missing/blank image tiles), as described elsewhere herein.

The edge server is configured to provide indicated cached content and the streamed generated interactive content to the client device, as described elsewhere herein.

Hence in general terms, the edge server caches game assets (animations, images, audio, skyboxes, overlays, etc.), and receives dynamically generated content from the primary server. The edge server then combines the received content with cached content as appropriate/indicated, before passing the combined result on to the end client.

Instances of this summary embodiment implementing the methods and techniques described herein (for example by use of suitable software instruction) are envisaged within the scope of the application, including but not limited to that:
- the indicated cached content comprises non-interactive content (for example as in the first mode), and the edge server is configured to stream the non-interactive content to the client device, as described elsewhere herein;
   - In this instance, optionally the non-interactive content is pre-recorded video content (e.g. animations), as described elsewhere herein;
- the indicated cached content comprises non-interactive content to use in parallel with interactive content (for example as in the second mode), and the edge server is configured to incorporate the non-interactive content into the streamed generated interactive content provided to the client device, as described elsewhere herein;
   - In this instance, optionally the non-interactive content is pre-recorded audio content, as described elsewhere herein;
- the indicated cached content comprises some or all of an image generated as part of the interactive content (for example as in the third mode), the primary server is configured to stream any additional image data other than the indicated cached content that completes the image generated as part of the interactive content, and the edge server is configured to combine the indicated cached content and the stream from the primary server to form a complete image to stream to the client device, as described elsewhere herein;
   - In this instance, optionally the indicated cached content comprises some or all of a preceding complete image formed by the edge server, as described elsewhere herein;
   - Similarly in this instance, optionally the primary server is configured to provide to the edge server motion data to specify a transform of the indicated cached content to at least part of a current image generated as part of the interactive content, and the edge server is configured to perform the transform on the indicated cached content to update the indicated cached content prior to combining it with the stream from the primary server, as described elsewhere herein;
- the primary server is configured to partially generate interactive content (for example as in the fourth mode) and to stream partially generated interactive content to the edge server, and the edge server is configured to receive partially generated interactive content from the primary server, and further configured to generate interactive content that complements the received partially generated interactive content, responsive to instructions from the primary server, and the edge server is also configured to combine its generated complementary interactive content and the streamed partially generated interactive content from the primary server to form a complete image to stream to the client device, as described elsewhere herein;
   - In this instance, optionally the generated complementary interactive content comprises one or more selected from the list consisting of a skybox, and textured geometry for one or more objects (e.g. parts of a stadium) more than a threshold distance from a virtual viewpoint of the partially generated interactive content, as described elsewhere herein;
- The system comprises a client device configured to receive generated interactive content from one or more of the primary server and the edge server, wherein the client device is further configured to store at least some cached content, being predetermined content of the interactive content generated by the primary server, the client device is configured to receive data from one or more of the primary server and the edge server indicating a cached content, and the client device is configured to combine the indicated cached content and the stream from one or more of the primary server and the edge server to form a complete image for the client device, as described elsewhere herein; and
- the edge server is further configured to update which content to cache, by evaluating a cumulative sum of data provided by the edge server to the client device for a respective cached content, and estimating a cumulative sum of data for a respective generated interactive content not provided by the edge server to the client device, within a predetermined period; and the edge server is further configured to include the respective generated interactive content at the edge server, for subsequent use as cached content, if the estimated sum exceeds the evaluated sum, as described elsewhere herein; optionally the inclusion may be in addition to the incumbent respective cached content, or replace it (e.g. in active/working memory, if there is insufficient memory to hold both).

As noted previously herein, the client device may also perform some of the functions described for the edge server, either in conjunction with the edge server, and/or directly with the primary server.

Accordingly, and referring again to Figure 4, in a summary embodiment of the present description a client device (10, 10') comprises the following.

A content receiver (e.g. data port 60) configured to receive a stream of generated interactive content from one or more of a primary server and an edge server, as described elsewhere herein.

Storage (e.g. RAM 40, and/or SSD 50) configured to store at least some cached content, being predetermined content of the interactive content generated by the primary server, as described elsewhere herein.

An indication data receiver (e.g. data port 60) configured to receive data from one or more of the primary server and the edge server indicating a cached content of the entertainment device (again, this data may be explicit for example in the form of metadata or instructions, or may be implicit for example in the form of blank parts of images, or missing/blank image tiles), as described elsewhere herein.

A graphics combining processor (e.g. GPU 30 and/or CPU 20) configured to combine the indicated cached content and the stream from one or more of the primary server and the edge server to form a complete image for the entertainment device, as described elsewhere herein.

And the client device is configured to output the complete image for display to a user (for example using AV port 90 to a remote display, or bus 100 to an integral display, as appropriate), as described elsewhere herein.

It will be appreciated that the edge server system, the primary server, the edge server, and/or the client device may comprise conventional hardware suitably adapted as applicable by software instruction or by the inclusion or substitution of dedicated hardware to implement the methods and techniques described elsewhere herein.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

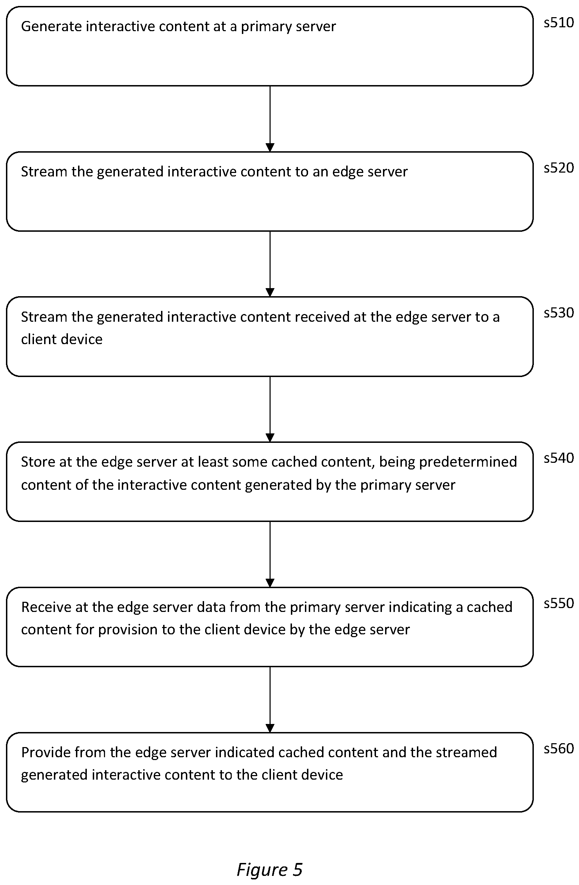

Turning now to Figure 5, in a summary embodiment of the present description, a method of interactive content provision comprising the following steps.
In a first step s510, generating interactive content at a primary server;
In a second step s520, streaming the generated interactive content to an edge server;
In a third step s530, streaming the generated interactive content received at the edge server to a client device;
In a fourth step s540, storing at the edge server at least some cached content, being predetermined content of the interactive content generated by the primary server;
In a fifth step s550, receiving at the edge server data from the primary server indicating a cached content for provision to the client device by the edge server; and
In a sixth step s560, providing from the edge server indicated cached content and the streamed generated interactive content to the client device.

It will be appreciated that some of these steps may occur in parallel or in a different order; for example the fourth step listed above is likely to occur at least in part before the first step, and in some cases the second and fifth steps may be substantially in parallel, as may the third and sixth steps; indeed, the sixth step is in effect a modification of the third step when the third step does not include all the content required for the client device.

It will be apparent to a person skilled in the art that variations in the above method corresponding to the methods and techniques described herein and to the operation of the various embodiments of the apparatuses as described and claimed herein are considered within the scope of the present invention, including but not limited to that:
- the method comprises the steps of receiving at a client device generated interactive content from one or more of the primary server and the edge server, storing at the client device at least some cached content, being predetermined content of the interactive content generated by the primary server, receiving at the client device data from one or more of the primary server and the edge server indicating a cached content, and combining at the client device the indicated cached content and the stream from one or more of the primary server and the edge server to form a complete image for the client device, as described elsewhere herein; and
- the method comprises the steps of updating which content to cache at the edge server, by evaluating a cumulative sum of data provided by the edge server to the client device for a respective cached content and estimating a cumulative sum of data for a respective generated interactive content not provided by the edge server to the client device within a predetermined period, and including the respective generated interactive content at the edge server, for subsequent use as cached content, if the estimated sum exceeds the evaluated sum, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An interactive content provision system, comprising:
a primary server configured to generate interactive content, and to stream generated interactive content to an edge server; and
an edge server configured to receive generated interactive content from the primary server, and stream it to a client device;
wherein
the edge server is further configured to store at least some cached content, being predetermined content of the interactive content generated by the primary server;
the edge server is configured to receive data from the primary server indicating a cached content for provision to the client device by the edge server; and
the edge server is configured to provide streamed generated interactive content and indicated cached content to the client device.

2. The system of claim 1, in which:
the indicated cached content comprises non-interactive content, and
the edge server is configured to stream the non-interactive content to the client device.

3. The system of any preceding claim, in which:
the indicated cached content comprises non-interactive content to use in parallel with interactive content, and
the edge server is configured to incorporate the non-interactive content into the streamed generated interactive content provided to the client device.

4. The system of any preceding claim, in which:
the indicated cached content comprises some or all of an image generated as part of the interactive content;
the primary server is configured to stream any additional image data other than the indicated cached content that completes the image generated as part of the interactive content; and
the edge server is configured to combine the indicated cached content and the stream from the primary server to form a complete image to stream to the client device.

5. The system of claim 4, in which
the indicated cached content comprises some or all of a preceding complete image formed by the edge server.

6. The system of claim 4 or claim 5, in which
the primary server is configured to provide to the edge server motion data to specify a transform of the indicated cached content to at least part of a current image generated as part of the interactive content; and
the edge server is configured to perform the transform on the indicated cached content to update the indicated cached content prior to combining it with the stream from the primary server.

7. The system of any preceding claim, in which:
the primary server is configured to partially generate interactive content, and to stream partially generated interactive content to the edge server; and
the edge server is configured to receive partially generated interactive content from the primary server;
wherein
the edge server is further configured to generate interactive content that complements the received partially generated interactive content, responsive to instructions from the primary server; and
the edge server is configured to combine its generated complementary interactive content and the streamed partially generated interactive content from the primary server to form a complete image to stream to the client device.

8. The system of claim 7, in which
the generated complementary interactive content comprises one or more selected from the list consisting of:
i. a skybox; and
ii. textured geometry for one or more objects more than a threshold distance from a virtual viewpoint of the partially generated interactive content.

9. The system of any preceding claim, comprising:
a client device configured to receive generated interactive content from one or more of the primary server and the edge server;
wherein
the client device is further configured to store at least some cached content, being predetermined content of the interactive content generated by the primary server;
the client device is configured to receive data from one or more of the primary server and the edge server indicating a cached content; and
the client device is configured to combine the indicated cached content and the stream from one or more of the primary server and the edge server to form a complete image for the client device.

10. The system of any preceding claim, in which
the edge server is further configured to update which content to cache, by
evaluating a cumulative sum of data provided by the edge server to the client device for a respective cached content, and
estimating a cumulative sum of data for a respective generated interactive content not provided by the edge server to the client device,
within a predetermined period;
and the edge server is further configured to include the respective generated interactive content at the edge server, for subsequent use as cached content, if the estimated sum exceeds the evaluated sum.

11. A client device, comprising
a content receiver configured to receive a stream of generated interactive content from one or more of a primary server and an edge server;
storage configured to store at least some cached content, being predetermined content of the interactive content generated by the primary server;
an indication data receiver configured to receive data from one or more of the primary server and the edge server indicating a cached content of the entertainment device;
a graphics combining processor configured to combine the indicated cached content and the stream from one or more of the primary server and the edge server to form a complete image for the entertainment device; and
the entertainment system is configured to output the complete image for display to a user.

12. A method of interactive content provision, comprising the steps of:
generating interactive content at a primary server;
streaming the generated interactive content to an edge server;
streaming the generated interactive content received at the edge server to a client device;
storing at the edge server at least some cached content, being predetermined content of the interactive content generated by the primary server;
receiving at the edge server data from the primary server indicating a cached content for provision to the client device by the edge server; and
providing from the edge server the indicated cached content and the streamed generated interactive content to the client device.

13. A method according to claim 12, comprising the steps of:
receiving at a client device generated interactive content from one or more of the primary server and the edge server;
storing at the client device at least some cached content, being predetermined content of the interactive content generated by the primary server;
receiving at the client device data from one or more of the primary server and the edge server indicating a cached content; and
combining at the client device the indicated cached content and the stream from one or more of the primary server and the edge server to form a complete image for the client device.

14. A method according to claim 12 or claim 13, comprising the steps of:
updating which content to cache at the edge server, by
evaluating a cumulative sum of data provided by the edge server to the client device for a respective cached content, and
estimating a cumulative sum of data for a respective generated interactive content not provided by the edge server to the client device,
within a predetermined period;
and including the respective generated interactive content at the edge server, for subsequent use as cached content, if the estimated sum exceeds the evaluated sum.

15. A computer program comprising computer executable instructions adapted to cause a computer system to perform the method of any one of claims 12 to 14.
